# EUROPÄISCHE PATENTSCHRIFT

(11) **EP 3 625 466 B1**
(45) Veröffentlichungstag und Bekanntmachung des Hinweises auf die Patenterteilung: **22.02.2023**
(21) Anmeldenummer: 18725495.8
(22) Anmeldetag: 16.05.2018
(51) Int. Cl.: F16B 25/00

(54) **VERBINDUNGSELEMENT AUS METALL FÜR DEN KONSTRUKTIVEN HOLZBAU FÜR SEISMISCHE BELASTUNG UND VERFAHREN ZUM HERSTELLEN EINES VERBINDUNGSELEMENTS**
CONNECTION ELEMENT MADE OF METAL FOR TIMBER CONSTRUCTION FOR SEISMIC LOADING, AND METHOD FOR PRODUCING A CONNECTION ELEMENT
ÉLÉMENT D'ASSEMBLAGE EN MÉTAL POUR CONSTRUCTION BOIS ADAPTÉ AUX CHARGES SISMIQUES ET PROCÉDÉ DE FABRICATION D'UN ÉLÉMENT D'ASSEMBLAGE

(30) Priorität: 17.05.2017 DE 102017208282
(43) Veröffentlichungstag der Anmeldung: 25.03.2020
(73) Patentinhaber: Schmid Schrauben Hainfeld GmbH, 3170 Hainfeld (AT)
(72) Erfinder: SCHEIBENREITER, Johann, 3170 Hainfeld (AT); REISCHER, Erwin, 3170 Hainfeld (AT); LEB, Gerhard, 3204 Kirchberg (AT)
(74) Vertreter: Patentanwälte Ruff, Wilhelm, Beier, Dauster & Partner mbB
(86) Internationale Anmeldenummer: PCT/EP2018/062818
(87) Internationale Veröffentlichungsnummer: WO 2018/210975

(56) Entgegenhaltungen:
- EP-A1- 2 616 694
- EP-B1- 2 616 694
- JP-A- 2010 117 015
- US-A1- 2003 024 194

## Beschreibung

Die Erfindung betrifft ein Verbindungselement, insbesondere eine Holzschraube, aus Metall für den konstruktiven Holzbau für seismische Belastung mit einem Schraubenschaft, wobei der Schraubenschaft wenigstens abschnittsweise mit einem Gewinde versehen ist. Insbesondere kann ein Schraubenkopf mit einer Antriebsausbildung vorgesehen sein und der Schraubenschaft kann an seinem, dem Schraubenkopf gegenüberliegenden Ende, eine Schraubenspitze aufweisen und der Schraubenschaft kann ausgebildet sein, um ein Gewinde in einem Holzbauteil zu formen. Die Erfindung betrifft auch ein Verfahren zum Herstellen eines erfindungsgemäßen Verbindungselements, insbesondere einer Holzschraube.

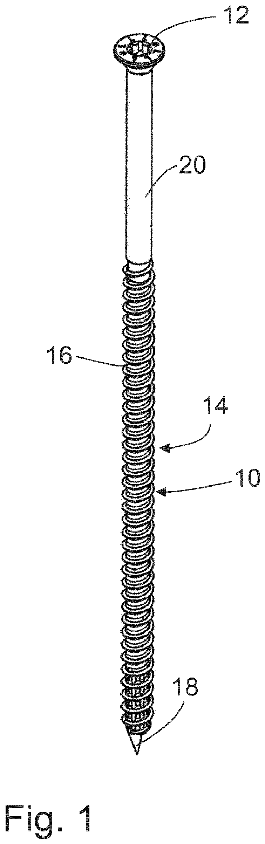

Aus der japanischen Patentzusammenfassung JP 2010 117015 A ist eine Schraube bekannt, bei der die Zugfestigkeit der Schraube kleiner sein soll als eine Kraft F1, mit der der Gewindeschaft aus einem Werkstück herausgezogen werden kann und auch kleiner ist als eine Kraft F2, die benötigt wird, um den Kopf der Schraube in das Werkstück einzuziehen. Die Schraube soll demnach einen Dehnabschnitt aufweisen, der nachgibt, bevor das Gewinde oder der Kopf aus dem Werkstück beziehungsweise in das Werkstück gezogen werden. Die Schraube ist zur Erhöhung der Erdbebensicherheit von Gebäuden vorgesehen. Die Schraube (Fig. 1b) kann dabei vollständig aus einem Stahl mit sehr geringer Zugfestigkeit ausgebildet sein. Bei einer weiteren Ausführungsform der Schraube (Fig. 7b) soll ein Dehnabschnitt der Schraube einen Durchmesser aufweisen, der deutlich kleiner ist als der Kerndurchmesser des Gewindes.

Aus der US-Offenlegungsschrift US 2003/0024194 A1 ist eine Schraube zur Befestigung von Gipsplatten an einer Unterkonstruktion bekannt, wobei Erdbebensicherheit gewährleistet werden soll. Um die Erdbebensicherheit zu gewährleisten, wird der Schaft der Schraube deutlich dicker gemacht als bei einer konventionellen Schraube, damit die Schraube Scherbelastungen besser standhält. Die Schraube lässt sich somit in axialer Richtung weniger stark dehnen als eine konventionelle Schraube, ist gegenüber Scherbelastungen aber widerstandsfähiger als eine konventionelle Schraube.

Aus der internationalen Offenlegungsschrift WO 2012/034835 A1 ist eine Schraube bekannt, die einen Dehnabschnitt mit deutlich verringertem Durchmesser gegenüber einem übrigen Schraubenschaft aufweist. Der Dehnabschnitt soll versagen, bevor die Verankerung des Gewindes im Werkstück versagt.

Mit der Erfindung sollen ein verbessertes Verbindungselement, insbesondere eine verbesserte Holzschraube, und ein verbessertes Verfahren zum Herstellen eines Verbindungselements, insbesondere einer Holzschraube angegeben werden, mit denen eine Verbesserung der Festigkeit des Verbindungselements gegenüber stark wechselnden Belastungen, insbesondere beim Auftreten von Erdbeben, bereitgestellt werden kann.

Erfindungsgemäß ist hierzu ein Verbindungselement, insbesondere eine Holzschraube, aus Metall für den konstruktiven Holzbau mit einem Schraubenschaft, wobei der Schraubenschaft wenigstens abschnittsweise mit einem Gewinde versehen ist, vorgesehen, bei dem der Schraubenschaft wenigstens einen Dehnabschnitt aufweist, wobei eine Länge des Dehnabschnitts wenigstens 10 % des Schraubenschafts beträgt, wobei der Dehnabschnitt gegenüber dem übrigen Schraubenschaft in Längsrichtung der Schraube stärker plastisch und/oder elastisch dehnbar ist und wobei eine Zugfestigkeit des Dehnabschnitts um einen Faktor 1,25 bis 5 kleiner ist als eine Zugfestigkeit des übrigen Schraubenschafts.

Indem das erfindungsgemäße Verbindungselement, insbesondere eine Holzschraube, einen Dehnabschnitt aufweist, kann sichergestellt werden, dass das erfindungsgemäße Verbindungselement auch bei stark wechselnden Beanspruchungen, wie sie beispielsweise bei einem Erdbeben auftreten, nicht versagt. Mit anderen Worten weist das erfindungsgemäße Verbindungselement einen Dehnschaft auf, um einer Beanspruchung in Folge von Erdbeben oder in Folge anderer dynamischer Lasten standzuhalten. Das erfindungsgemäße Verbindungselement kann sich in dem Dehnabschnitt stärker dehnen als im übrigen Schraubenschaft und auch stärker als eine konventionelle Holzschraube. Die Dehnung kann teilweise plastisch und teilweise elastisch erfolgen. Eine rein elastische Dehnung im Rahmen der Erfindung ist ebenfalls vorgesehen. Wenn das erfindungsgemäße Verbindungselement beispielsweise in einem Gebäude verbaut ist und dieses Gebäude einer stark wechselnden Beanspruchung, beispielsweise während eines Erdbebens, unterworfen wird, ermöglicht es das erfindungsgemäße Verbindungselement, dass sich die einzelnen Bauteile des Gebäudes, die mit dem erfindungsgemäßen Verbindungselement verbunden sind, gegeneinander bewegen und nach Abklingen der Belastung wieder in ihre ursprüngliche Lage zurückkehren können bei einer plastischen Dehnung zumindest noch aneinander gesichert und damit miteinander verbunden sind. Eine konventionelle Holzschraube ohne Dehnabschnitt würde in einem solchen Fall schlichtweg abreißen. Selbst wenn die einzelnen Bauteile des Gebäudes, beispielsweise Holzbalken, dann durch das Erdbeben nicht beschädigt wären, wäre doch das Gebäude selbst nicht mehr benutzbar, da die Schraubverbindungen nicht mehr zuverlässig wären. Beispielsweise erlaubt die erfindungsgemäße Holzschraube bei einer Belastung von 55 bis 60 kN eine Dehnung bzw. Längung von 10 mm oder sogar mehr als 10 mm. Eine konventionelle Holzschraube würde bereits bei einer Dehnung von 4 mm abreißen. Es ist auch festzustellen, dass eine simple Erhöhung der Zugfestigkeit bei einer konventionellen Schraube das der Erfindung zugrunde liegende Problem nicht lösen könnte. Denn bei einem Erdbeben werden die einzelnen Bauteile, beispielsweise Holzbalken, eines Gebäudes mit sehr großer Kraft gegeneinander bewegt. Wenn nun eine konventionelle Schraube mit stark erhöhter Zugfestigkeit eingesetzt würde, so würde zwar die Schraube selbst nicht abreißen, allerdings würden die Holzbalken zerstört. Mit dem erfindungsgemäßen Verbindungselement ist es nun möglich, bei sehr starken Belastungen, wie beispielsweise bei einem Erdbeben, eine begrenzte Bewegung der Bauteile eines Gebäudes zueinander zu erlauben, ohne dass die Bauteile selbst oder das Verbindungselement versagen. Das erfindungsgemäße Verbindungselement ist speziell für den konstruktiven Holzbau vorgesehen und kann sowohl in Weichhölzern, beispielsweise Nadelhölzern, als auch in Harthölzern, beispielsweise Laubhölzer mit hoher Rohdichte, sowie auch in Holzwerkstoffen wie Furnierschichtholz, LVL, OSB, die im konstruktiven Holzbau üblich sind, angewendet werden. Die erfindungsgemäße Holzschraube kann auch zur Verbindung von Bauteilen aus Holz-Kunststoff-Bauteilen, sogenannte WPC-Bauteile (Wood-Plastic-Composites), angewendet werden. Der Schraubenschaft kann im Dehnabschnitt und/oder im Bereich des Gewindes zusätzlich stärker plastisch dehnbar sein als im übrigen Schraubenschaft. Auch dadurch wird ein vollständiges plastisches Versagen des Verbindungselements verhindert. Die Konzentration von elastischer und plastischer Dehnung erlaubt Langenänderungen der erfindungsgemäßen Schraube von mehr als 8 mm, insbesondere mehr als 10 mm, ohne vollständiges Versagen der Schraube. Eine Zugspannung kann dabei im Bereich von 1000 N/mm² liegen. Die Zugfestigkeit im Dehnabschnitt und/oder im Bereich des Gewindes liegt nach dem Anlassen im Bereich zwischen 700 MPa und 1050 MPa.

In Weiterbildung der Erfindung weist der Dehnabschnitt einen im Wesentlichen glatten Außenumfang ohne Gewinde auf.

Eine solche Ausbildung des Dehnabschnitts, insbesondere mit kreisrundem Querschnitt, erlaubt eine exakte Vorherbestimmung der Dehnbarkeit und der Zugfestigkeit des Dehnabschnitts.

In Weiterbildung der Erfindung ist wenigstens ein Dehnabschnitt mit einem Gewinde versehen. Beispielsweise kann der Dehnabschnitt oder bei mehreren Dehnabschnitten einer oder alle der Dehnabschnitte auch mit einem Gewinde versehen sein. Dies erschwert zwar die Vorausberechnung der Dehnbarkeit und Zugfestigkeit des Dehnabschnitts oder der Dehnabschnitte, kann aber gegebenenfalls dazu dienen, vorbestimmte Randbedingungen, unter denen das erfindungsgemäße Verbindungselement eingesetzt werden soll, zu erfüllen.

In Weiterbildung der Erfindung sind mehrere Dehnabschnitte vorgesehen.

In Weiterbildung der Erfindung liegt ein Außendurchmesser des Schraubenschafts im Bereich zwischen 5 mm und 24 mm.

Ein solcher Größenbereich des Außendurchmessers ist für den konstruktiven Holzbau vorteilhaft und erlaubt Außendurchmesser des Dehnabschnitts oder der Dehnabschnitte, die mit vergleichsweise geringem Aufwand hergestellt und darüber hinaus in Bezug auf ihre Dehnbarkeit und Zugfestigkeit mit sehr kleinen Toleranzen zu fertigen sind.

In Weiterbildung der Erfindung besteht das Verbindungselement aus einem Vergütungsstahl, insbesondere aus dem Werkstoff 37Cr4 (1.7034), aus dem Werkstoff 20MnB4 (1.5525) oder 17B2 (1.5502).

Die Herstellung des erfindungsgemäßen Verbindungselements aus einem Vergütungsstahl erlaubt es, die Dehnbarkeit und Zugfestigkeit des erfindungsgemäßen Verbindungselements speziell im Dehnabschnitt exakt einzustellen, indem beispielsweise eine Wärmebehandlung des vollständigen Verbindungselements oder auch nur des Dehnabschnitts vorgenommen wird, beispielweise Härten und nachfolgendes Anlassen.

In Weiterbildung der Erfindung weist der Schraubenschaft eine Bohrspitze auf.

In Weiterbildung der Erfindung ist ein Querschnitt des Schraubenschafts im Bereich der Bohrspitze etwa halbkreisförmig.

Mittels einer halbkreisförmig ausgebildeten Bohrspitze können die Einschraubzeit und die bohrende Wirkung bzw. die Anbisszeit positiv beeinflusst werden. Die erfindungsgemäße Holzschraube kann aber auch ohne Bohrspitze oder auch mit anderen Arten von Bohrspitzen ausgeführt werden.

In Weiterbildung der Erfindung ist in den, mit dem Gewinde versehenen Abschnitten des Schraubenschafts ein Kerndurchmesser größer oder gleich 60 % eines Außendurchmessers.

Bei dem erfindungsgemäßen Verbindungselement ist das Verhältnis des Kerndurchmessers zum Außendurchmesser somit größer als bei konventionellen Holzschrauben. Dies hat sich in Bezug auf die Belastbarkeit der Schraube als positiv herausgestellt. Speziell kann durch den im Vergleich zu konventionellen Holzschrauben größeren Kerndurchmesser bzw. einen Kerndurchmesser, der größer oder gleich 60 % eines Außendurchmessers ist, in den mit dem Gewinde versehenen Abschnitten des Schraubenschafts eine erhöhte Zugfestigkeit erreicht werden. Bei sehr großer Zugbelastung der Schraube können dann die Dehnbarkeit und Zugfestigkeit im Dehnabschnitt so eingestellt werden, dass vorrangig der Dehnabschnitt elastisch und/oder plastisch verformt wird. Die mit dem Gewinde versehenen Abschnitte des Schraubenschafts dehnen sich hingegen vergleichsweise wenig, so dass auch der Eingriff des Gewindes mit dem Holzbauteil erhalten bleibt.

In Weiterbildung der Erfindung ist in den, mit dem Gewinde versehenen Abschnitten des Schraubenschafts ein Bereich zwischen zwei Gewindeflanken des Gewindes wenigstens abschnittsweise konkav gewölbt.

Durch eine solche Ausbildung des Bereichs zwischen zwei Gewindeflanken, mit anderen Worten also des Gewindegrunds, lässt sich eine erhöhte Festigkeit des mit dem Gewinde versehenen Abschnitts erzielen.

In Weiterbildung der Erfindung sind die Gewindeflanken mit einer Abplattung versehen.

Auf diese Weise lässt sich ein sicherer Halt und auch eine geringere Spaltwirkung des Gewindes in einem Holzbauteil erzielen.

In Weiterbildung der Erfindung beträgt ein Flankenwinkel der Gewindeflanken 40°.

Ein solcher Flankenwinkel hat sich als vorteilhaft herausgestellt.

Gemäß der Erfindung liegt ein Durchmesser des Schraubenschafts im Dehnabschnitt zwischen dem Kerndurchmesser des Gewindes und dem Außendurchmesser des Gewindes.

Das der Erfindung zugrunde liegende Problem wird auch durch ein Verfahren zum Herstellen eines erfindungsgemäßen Verbindungselements, insbesondere einer Holzschraube, gelöst, bei dem das Herstellen eines Schraubenschafts oder eines Rohlings für den Schraubenschaft und das Einstellen einer elastischen und/oder plastischen Dehnbarkeit des Schraubenschafts vorgesehen sind, so dass der Schraubenschaft in einem Dehnabschnitt stärker elastisch und/oder plastisch dehnbar ist als im übrigen Schraubenschaft.

Gemäß der Erfindung erfolgt das Verringern einer Zugfestigkeit des Schraubenschafts im Dehnabschnitt.

In Weiterbildung der Erfindung ist das Verringern eines Querschnitts des Schraubenschafts im Dehnabschnitt vorgesehen.

Eine solche Verringerung eines Querschnitts kann beispielsweise durch Walzen, Rollen oder Schleifen des Schraubenschafts erfolgen.

In Weiterbildung der Erfindung ist das Verringern des Querschnitts des Schraubenschafts im Dehnabschnitt um maximal 30 % gegenüber dem übrigen Schraubenschaft vorgesehen.

Gemäß der Erfindung ist das Wärmebehandeln des Schraubenschafts im Dehnabschnitt und/oder im Bereich des Gewindes vorgesehen.

Wird die erfindungsgemäße Holzschraube aus einem Vergütungsstahl hergestellt, kann, wie dies üblich ist, die vollständige Schraube thermisch gehärtet werden. Eine Dehnbarkeit und Zugfestigkeit im Dehnabschnitt und/oder im Gewinde kann dann durch Anlassen des Dehnabschnitts und/oder des Gewindes eingestellt werden.

In Weiterbildung der Erfindung ist das induktive Erwärmen und dadurch Anlassen des Schraubenschafts im Dehnabschnitt und/oder im Bereich des Gewindes vorgesehen.

Auf diese Weise kann in einem Produktionsprozess eine sehr gezielte und definierte lokale Erwärmung des Schraubenschafts im Dehnabschnitt und/oder im Bereich des Gewindes vorgenommen werden. Mittels Erwärmen und dadurch Anlasse, typischerweise nach dem zuvor erfolgten Härten, können die elastische und plastische Verformbarkeit des Schraubenschafts gezielt und präzise eingestellt werden.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. Es wird dabei ausdrücklich darauf hingewiesen, dass auch Einzelmerkmale aus der Beschreibung und den Zeichnungen miteinander kombiniert werden können, ohne den Rahmen der Erfindung zu überschreiten. Speziell können im Rahmen der Erfindung beispielsweise Einzelmerkmale aus den Zeichnungen oder aus einzelnen Absätzen der Beschreibung auch ohne die Merkmale, mit denen sie zusammen gesetzt oder beschrieben sind, in beliebiger Weise mit anderen Einzelmerkmalen kombiniert werden. In den Zeichnungen zeigen:
- Fig. 1: eine schematische Darstellung einer erfindungsgemäßen Holzschraube von schräg oben,
- Fig. 2: eine abschnittsweise Seitenansicht der Holzschraube der Fig. 1,
- Fig. 3: eine Draufsicht auf die Holzschraube der Fig. 2,
- Fig. 4: eine abschnittsweise Ansicht auf die Schnittebene A-A in Fig. 3,
- Fig. 5: eine vergrößerte Darstellung der Einzelheit Z in Fig. 2 und
- Fig. 6: eine vergrößerte Darstellung der Spitze der Holzschraube der Fig. 2 aus einer anderen Blickrichtung.

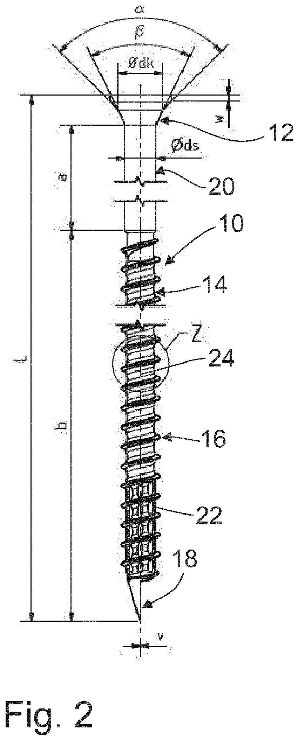

Die Darstellung der Fig. 1 zeigt ein als Holzschraube 10 ausgebildetes erfindungsgemäßes Verbindungselement, wobei die Holzschraube 10 einen Schraubenkopf 12 mit einer Antriebsausbildung und einen Schraubenschaft 14 aufweist. Der Schraubenschaft 14 ist in einem Abschnitt 16 mit einem Gewinde versehen und an seinem, dem Schraubenkopf 12 gegenüberliegenden Ende mit einer Schraubenspitze 18, die, siehe auch Fig. 2, bei der dargestellten Ausführungsform als Bohrspitze ausgebildet ist. Im Rahmen der Erfindung ist das Vorsehen einer Bohrspitze nicht notwendig. Ist eine Bohrspitze vorgesehen, so kann diese in unterschiedlicher Weise ausgebildet sein.

Neben dem Abschnitt mit dem Gewinde 16 ist der Schraubenschaft 14 zwischen dem Schraubenkopf 12 und dem Beginn des Gewindes 16 mit einem Dehnabschnitt 20 versehen. Der Dehnabschnitt weist bei der dargestellten Ausführungsform einen glatten Außenumfang auf sowie einen kreiszylindrischen Querschnitt. Der glatte Außenumfang kann im Rahmen der Erfindung dabei mit einem Dehnabschnitt 20 mit nicht kreisförmigem Querschnitt kombiniert werden.

Der Dehnabschnitt weist gegenüber dem übrigen Schraubenschaft 14 in Längsrichtung der Schraube eine stärkere elastische Dehnbarkeit auf und eine gegenüber dem übrigen Schraubenschaft 14 verringerte Zugfestigkeit. Der Dehnabschnitt 20 ist gegenüber dem übrigen Schraubenschaft 14 auch leichter plastisch verformbar, speziell in Längsrichtung dehnbar. Im Rahmen der Erfindung ist die Zugfestigkeit des Dehnabschnitts 20 gegenüber dem übrigen Schraubenschaft, also dem Abschnitt des Schraubenschafts mit dem Gewinde 16, um einen Faktor 1,25 bis 5 kleiner.

Ist die erfindungsgemäße Holzschraube 10 in einer Konstruktion des konstruktiven Holzbaus verbaut, beispielsweise in einem Gebäude, so wird die Holzschraube 10 wie eine konventionelle Holzschraube verwendet. Die elastische und plastische Dehnbarkeit des Dehnabschnitts 20 und auch des Abschnitts mit dem Gewinde 16 sowie die Zugfestigkeit des Dehnabschnitts 20 sind dabei so ausgelegt, dass es bei normalen Belastungen des Gebäudes zu einer Dehnung der erfindungsgemäßen Holzschraube 10 kommt, die sich nicht wesentlich von der Dehnung konventioneller Holzschrauben unterscheidet. Mit anderen Worten kann die erfindungsgemäße Holzschraube 10 wie eine konventionelle Holzschraube eingesetzt werden. Der Unterschied zwischen der erfindungsgemäßen Holzschraube und einer konventionellen Holzschraube zeigt sich erst bei Belastungen einer Holzkonstruktion, beispielsweise eines Gebäudes, die deutlich über übliche Belastungen hinausgehen.

Solche Belastungen können bei Gebäuden beispielsweise im Erdbebenfall als sogenannte seismische Belastungen auftreten. Werden Holzkonstruktionen von Gebäuden mit konventionellen Holzschrauben miteinander verbunden, so ist im Erdbebenfall zu beobachten, dass konventionelle Holzschrauben bereits bei vergleichsweise kleinen Dehnungen der Schraubenschäfte abreißen. Beispielsweise reißt eine Schraube mit einem Durchmesser von 12 mm typischerweise bei einer Dehnung des Schraubenschafts von etwa 4 mm ab. Wenn sich im Erdbebenfall beispielsweise die Holzbalken eines Gebäudes gegeneinander bewegen, können aber durchaus Verformungswege von über 4 mm auftreten.

Bei der erfindungsgemäßen Holzschraube 10 ist die Dehnbarkeit und Zugfestigkeit des Dehnabschnitts 20 hingegen so eingestellt, dass die Holzschraube 10 wesentlich stärkere elastische und plastische Verformungen ertragen kann, ohne zu versagen. Beispielsweise ist die Dehnbarkeit und Zugfestigkeit des Dehnabschnitts 20 so eingestellt, dass die erfindungsgemäße Schraube bei einem Schraubendurchmesser von 12 mm bis zu 10 mm, vorzugsweise mehr als 10 mm, gedehnt werden kann. Diese Dehnung tritt dabei zum weit überwiegenden Teil im Dehnabschnitt 20 auf. Während eines Erdbebens können sich durch eine oder mehrere erfindungsgemäße Holzschrauben 10 verbundene Holzbauteile dadurch begrenzt gegeneinander bewegen und das Gebäude bzw. die Holzkonstruktion kann den übermäßigen Belastungen durch ein Erdbeben nachgeben, ohne dass die Holzbauteile selbst oder die Holzschrauben 10 dabei beschädigt werden. Nach Abklingen der übermäßigen Belastung zieht sich der Dehnabschnitt 20 elastisch zunächst teilweise wieder zusammen und die Holzbauteile des Gebäudes nehmen dadurch zumindest annähernd ihre ursprüngliche, vorgesehene Platzierung zueinander ein.

Es ist dabei festzustellen, dass die einfache Erhöhung der Zugfestigkeit einer konventionellen Holzschraube zwar dazu führen würde, dass bei übermäßigen Belastungen nicht die Schraube zerstört wird. Die starke Erhöhung der Festigkeit bzw. Zugfestigkeit einer Schraube führt aber nicht zu einer größeren Dehnbarkeit der Schraube. Selbst wenn also bei übermäßiger Belastung einer Holzkonstruktion eine solche Schraube selbst nicht versagen würde, so würden dann eben die Holzbauteile zerstört, da eine konventionelle Schraube, selbst wenn sie nicht abreißen würde, in das Holz eindringen würde, da sie schlichtweg keine ausreichende Verformung mitmacht.

Die Darstellung der Fig. 2 zeigt eine abschnittsweise Darstellung der erfindungsgemäßen Schraube 10 in einer Seitenansicht.

Der Schraubenkopf 12 ist in an und für sich konventioneller Weise ausgeführt und weist eine ebene Oberseite, einen sich an die Oberseite anschließenden, zylindrischen Abschnitt mit der Dicke w und dann einen kegelstumpfförmigen Abschnitt auf, der von der Oberseite des Schraubenkopfs 12 ausgehend zunächst einen größeren Kegelwinkel α und dann einen kleineren Kegelwinkel β einnimmt. Ein Übergang zwischen den beiden Abschnitten mit den unterschiedlichen Kegelwinkeln α und β erfolgt bei einem Durchmesser dk.

Am Ende des kegelstumpfförmigen Abschnitts beginnt der zylindrische Dehnabschnitt 20 der Schraube 10, der eine Länge a aufweist. Ein Durchmesser des Dehnabschnitts 20 beträgt ds.

Der Durchmesser des Dehnabschnitts 20 ist größer als der Kerndurchmesser d1 des Gewindes aber kleiner als der Außendurchmesser d2 des Gewindes.

An den Dehnabschnitt 20 schließt sich der Abschnitt mit dem Gewinde 16 an, an dessen, dem Kopf 12 abgewandten Ende die als Bohrspitze ausgebildete Schraubenspitze 18 angeordnet ist.

Eine Länge des Abschnitts des Schraubenschafts 14 mit dem Gewinde 16 und der Schraubenspitze 18 beträgt b. Die Gesamtlänge der Holzschraube 10 beträgt L.

Das Gewinde 16 ist als eingängiges Gewinde ausgebildet und weist eine spezielle Gestaltung der Gewindeflanken und Zwischenräume zwischen den Gewindeflanken, also des Gewindegrunds auf, die nachfolgend noch erläutert wird.

In einem, sich an die Schraubenspitze 18 anschließenden Bereich des Gewindes sind zwischen den einzelnen Gewindeflanken sich in radialer Richtung erstreckende Vorsprünge 22 vorgesehen, die in der Draufsicht linsenartig ausgeführt sind und sich jeweils zwischen zwei Gewindeflanken erstrecken. Die Vorsprünge 22 oder Rippen verlaufen dabei parallel zu einer Mittellängsachse 24 der Schraube 10. Ausgehend von der Schraubenspitze sind die Vorsprünge 22 in fünf Gewindegängen angeordnet. Die Vorsprünge 22 wirken als sogenannter Kernverdichter und verringern eine Spaltwirkung der Schraube und verbessern ein Eingreifen der Gewindeflanken in den umgebenden Holzwerkstoff. Die Vorsprünge 22 können beispielsweise auch das Einschraubmoment verringern. Die Vorsprünge 22 können im Rahmen der Erfindung weggelassen werden.

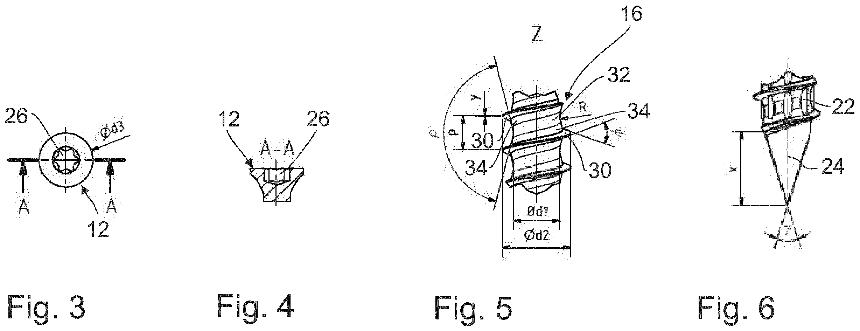

Die Schraubenspitze 18 ist, wie ausgeführt wurde, als Bohrspitze in Form einer sogenannten Halbspitze ausgeführt. Am freien Ende der Schraubenspitze 18 weist die Halbspitze eine Dicke v auf, wobei v sehr klein ist, so dass sich eine annähernd punktförmige Spitze ergibt, vgl. auch Fig. 6. An das freie Ende der Schraubenspitze 18 schließt sich ein halbkegelförmiger Bereich an, der bis zum Ende der Schraubenspitze 18 bis auf den Kerndurchmesser des Gewindes 16 anwächst. Die Schraubenspitze 18 ist aber als Halbspitze ausgeführt und weist daher die Form eines halben Kegels auf, der dadurch entsteht, dass ein Vollkegel in einer die Mittellängsachse 24 enthaltenden Ebene geteilt wird. Am Ende der Schraubenspitze 18 ist der Durchmesser des Schraubenschafts 14 dann wieder etwa kreisrund. Das Vorsehen einer Halbspitze verringert die Einschraubzeit und die sogenannte Anbisszeit der Schraube, indem die bohrende Wirkung der Schraubenspitze 18 verbessert wird.

Wie bereits ausgeführt wurde, kann die Schraubenspitze 18 aber auch in anderer Form ausgebildet sein.

Die als Halbspitze ausgeführte Schraubenspitze 18 weist, siehe Fig. 6, einen Spitzenwinkel γ auf. In Fig. 6 sind auch die Vorsprünge 22, die sich jeweils innerhalb eines Gewindegangs zwischen den Gewindeflanken erstrecken, gut zu erkennen.

Fig. 3 zeigt eine Draufsicht auf die Schraube 10 der Fig. 2. Der Schraubenkopf weist einen Außendurchmesser d3 auf und ist im Querschnitt kreisrund. In der Draufsicht der Fig. 3 ist eine als Vertiefung ausgeführte Antriebsausbildung 26 zu erkennen.

Fig. 4 zeigt eine abschnittsweise Schnittansicht auf die Schnittebene A-A in Fig. 3. Zu erkennen ist die als Vertiefung ausgeführte Antriebsausbildung 26 im Schraubenkopf 12 und die Ausbildung der Unterseite des Schraubenkopfs mit zwei unterschiedlichen Kegelwinkeln, die bereits anhand der Fig. 2 erläutert wurde.

Fig. 5 zeigt eine vergrößerte Darstellung der Einzelheit Z aus Fig. 2.

Zu erkennen ist, dass die Gewindeflanken 30 jeweils einen Flankenwinkel Ψ aufweisen, der etwa 40° beträgt. Die Gewindeflanken 30 sind darüber hinaus abgeplattet. Eine Breite der Abplattung der Gewindeflanken 30 ist mit dem Wert y bezeichnet. Eine Steigung des Gewindes 16, also ein Abstand zwischen zwei Gewindeflanken 30, ist mit dem Buchstaben p bezeichnet und beträgt bei einem Schraubendurchmesser d2 von 12 mm 6 mm. Ein Kerndurchmesser im Bereich des Gewindes 16 ist mit d1 angegeben. Bei der erfindungsgemäßen Holzschraube 10 ist der Kerndurchmesser d1 des Gewindes 16 größer oder gleich 60 % des Außendurchmessers d2. Das Verhältnis zwischen Kerndurchmesser d1 und Außendurchmesser d2 ist dadurch größer als bei konventionellen Holzschrauben. Dadurch kann eine erhöhte Festigkeit des Schraubenschafts 14 im Bereich des Gewindes 16 erzielt werden.

Der Bereich zwischen zwei Gewindeflanken 30, also der sogenannte Gewindegrund, ist bei dem Gewinde 16 konkav ausgebildet. Ein Mittelbereich 32, der also genau zwischen zwei Gewindeflanken 30 liegt, ist dabei mit einem Radius R konkav ausgerundet. An diesen Mittelabschnitt schließen sich Schrägflächen 34 an, die dann in die Gewindeflanken 30 übergehen. Der Mittelbereich 32 ist in Längsrichtung der Schraube gesehen geringfügig breiter als die Schrägflächen 34. Insgesamt ergibt sich, wie ausgeführt wurde, zwischen den Gewindeflanken 30 eine konkave Ausbildung des Gewindegrunds. Eine solche konkave Ausbildung führt zu einer gleichmäßigen Verteilung von Zugspannungen und dadurch zu einer erhöhten Festigkeit des Schraubenschafts 14 im Bereich des Gewindes 16.

In Fig. 2 ist die Gesamtlänge L der Schraube 10 eingetragen, die vorzugsweise zwischen 40 mm und 1500 mm beträgt. Wie anhand der Fig. 2 ausgeführt wurde, weist der Dehnabschnitt 20 eine gegenüber dem Abschnitt des Schraubenschafts 14 mit dem Gewinde 16 erhöhte Dehnbarkeit und verringerte Zugfestigkeit auf. Eine solche erhöhte elastische und/oder plastische Dehnbarkeit wird zum einen dadurch erreicht, dass der Durchmesser ds des Dehnabschnitts 20 gegenüber dem Außendurchmesser d2 der Schraube verringert ist. Beispielsweise kann der Dehnabschnitt 20 mechanisch durch Walzen, Rollen oder Schleifen in seinem Außendurchmesser verringert werden.

Die erhöhte elastische und/oder plastische Dehnbarkeit und verringerte Zugfestigkeit des Dehnabschnitts 20 wird vorrangig aber durch eine thermische Behandlung des Dehnabschnitts 20 erzielt. Die erfindungsgemäße Holzschraube 10 wird aus einem Vergütungsstahl hergestellt, beispielsweise aus dem Werkstoff 37Cr4 (zum Beispiel Werkstoffnummer 1.7034), aus dem Werkstoff 20MnB4 (zum Beispiel Werkstoffnummer 1.5525) oder aus dem Werkstoff 17B2 (zum Beispiel Werkstoffnummer 1.5502). Die vollständige Holzschraube 10 kann dann, entweder vor oder nach dem Herstellen des Schraubenkopfs 12 und des Gewindes 16, gehärtet werden. Nach dem Härten erfolgt dann eine thermische Behandlung lediglich des Dehnabschnitts 20, mit anderen Worten wird der Dehnabschnitt 20 erwärmt und dadurch angelassen. Dadurch kann die elastische Dehnbarkeit der Schraube 10 im Dehnabschnitt 20 erhöht werden. Gleichzeitig verringert sich auch die Zugfestigkeit des Schraubenschafts 14 im Dehnabschnitt 20. Eine gezielte Erwärmung lediglich des Dehnabschnitts 20 kann beispielsweise durch induktive Erwärmung erfolgen.

Im Rahmen der Erfindung kann der Durchmesser des Dehnabschnitts 20 verringert werden und/oder die elastische und/oder plastische Dehnbarkeit des Dehnabschnitts erhöht werden.

Am Beispiel einer Schraube mit dem Außendurchmesser d2 von 12 mm kann der Bereich des Schraubenschafts 14 mit dem Gewinde 16, also der Bereich mit der Länge b in Fig. 2, beispielsweise mit einer Zugfestigkeit von 1000 MPa bis 1400 MPa hergestellt werden, um eine hohe Bruchkraft der Schraube zu realisieren. Der Dehnabschnitt 20, der in Fig. 2 eine Länge a aufweist, kann mittels einer Wärmebehandlung, insbesondere induktives Erwärmen und dadurch partielles Anlassen, in einen Zugfestigkeitsbereich von 700 MPa bis 1000 MPa, insbesondere 1050Mpa, gebracht werden. Auf diese Weise ist die Schraube 10 im Dehnabschnitt 20 deutlich stärker dehnbar als im Bereich des übrigen Schraubenschafts 14 und kann dadurch sehr hohen Belastungen, wie sie beispielsweise bei Erdbeben auftreten, nachgeben, ohne zerstört zu werden.

Im Rahmen der Erfindung ist es auch möglich, das Gewinde 16 wenigstens abschnittsweise als Dehnabschnitt auszuführen. In einem solchen Fall erfolgt eine partielle Wärmebehandlung dann auch in einem Bereich des Gewindes 16. Im Rahmen der Erfindung können auch mehrere Dehnabschnitte 20, sei es mit oder ohne Gewinde, am Schraubenschaft 14 vorgesehen sein. Beispielsweise kann der Dehnabschnitt 20 zwischen zwei Abschnitten mit Gewinde 16 vorgesehen sein oder, in Abhängigkeit von der Anwendung, können sich auch mehrere Abschnitte mit Gewinde 16 und gewindefreie Dehnabschnitte 20 abwechseln.

Alternativ oder zusätzlich zu einer partiellen Wärmebehandlung des Dehnabschnitts 20 kann auch eine spanende oder spanlose Bearbeitung des Schraubenschafts 14 im Bereich des Dehnabschnitts 20 erfolgen. Beispielsweise kann der Schraubenschaft 14 im Bereich des Dehnabschnitts 20 durch Walzen, Rollen oder Schleifen in seinem Durchmesser verringert werden. Eine Verringerung des Durchmessers ds durch Walzen, Rollen, Schleifen oder dergleichen soll im Rahmen der Erfindung dabei maximal 30 % betragen.

Mit der Erfindung wird eine Holzschraube 10 geschaffen, die überraschenderweise durch gezielte Ausführung eines Abschnitts des Schraubenschafts mit geringerer Zugfestigkeit, aber dafür erhöhter elastischer und/oder plastischer Dehnbarkeit gegenüber den übrigen Abschnitten des Schraubenschafts, auch sehr hohen Belastungen standhalten kann, indem sie diesen Belastungen wenigstens teilweise nachgibt. Speziell im konstruktiven Holzbau kann durch die erfindungsgemäße Holzschraube dadurch eine erhöhte Sicherheit gegenüber sehr hohen Belastungen erreicht werden, beispielsweise gegenüber seismischen Belastungen durch Erdbeben.

## Patentansprüche

1. Verbindungselement, insbesondere Holzschraube, aus Metall für den konstruktiven Holzbau mit einem Schraubenschaft (14), wobei der Schraubenschaft (14) wenigstens abschnittsweise mit einem Gewinde (16) versehen ist, wobei der Schraubenschaft (14) wenigstens einen Dehnabschnitt (20) aufweist, wobei eine Länge des Dehnabschnitts (20) wenigstens 10% des Schraubenschafts (14) beträgt, wobei der Dehnabschnitt (20) gegenüber dem übrigen Schraubenschaft (14) in Längsrichtung des Verbindungselements (10) stärker plastisch und/oder elastisch dehnbar ist und wobei eine Zugfestigkeit des Dehnabschnitts (20) um einen Faktor 1,25 bis 5 kleiner ist als eine Zugfestigkeit des übrigen Schraubenschafts(14), **dadurch gekennzeichnet, dass** ein Durchmesser des Schraubenschafts im Dehnabschnitt (20) zwischen dem Kerndurchmesser (d1) des Gewindes (16) und dem Außendurchmesser (d2) des Gewindes (16) liegt und dass der Dehnabschnitt (20) wärmebehandelt ist, um die Zugfestigkeit des Schraubenschafts (14) im Dehnabschnitt (20) zu verringern.

2. Verbindungselement nach Anspruch 1, **dadurch gekennzeichnet, dass** wenigstens ein Dehnabschnitt einen im wesentlichen glatten Außenumfang ohne Gewinde aufweist.

3. Verbindungselement nach Anspruch 1 oder 2, **dadurch gekennzeichnet, dass** wenigstens ein Dehnabschnitt mit einem Gewinde versehen ist.

4. Verbindungselement nach wenigstens einem der vorstehenden Ansprüche, **dadurch gekennzeichnet, dass** das Verbindungselement aus einem Vergütungsstahl besteht.

5. Verbindungselement nach wenigstens einem der vorstehenden Ansprüche, **dadurch gekennzeichnet, dass** der Schraubenschaft (14) eine Bohrspitze aufweist.

6. Verbindungselement nach Anspruch 5, **dadurch gekennzeichnet, dass** ein Querschnitt des Schraubenschafts (14) im Bereich der Bohrspitze etwa halbkreisförmig ist.

7. Verbindungselement nach wenigstens einem der vorstehenden Ansprüche, **dadurch gekennzeichnet, dass** in den, mit dem Gewinde (16) versehenden Abschnitten des Schraubenschafts (14) ein Kerndurchmesser (d1) größer oder gleich 60% eines Außendurchmessers (d2) ist.

8. Verbindungselement nach wenigstens einem der vorstehenden Ansprüche, **dadurch gekennzeichnet, dass** in dem, mit dem Gewinde (16) versehenen Abschnitt des Schraubenschafts (14) ein Bereich zwischen zwei Gewindeflanken (30) des Gewindes 16) wenigstens abschnittsweise konkav gewölbt ist.

9. Verbindungselement nach wenigstens einem der vorstehenden Ansprüche, **dadurch gekennzeichnet, dass** die Gewindeflanken (30) mit einer Abplattung versehen sind.

10. Verbindungselement nach wenigstens einem der vorstehenden Ansprüche, **dadurch gekennzeichnet, dass** ein Flankenwinkel (4) der Gewindeflanken (30) 40° beträgt.

11. Verfahren zum Herstellen eines Verbindungselements nach wenigstens einem der vorstehenden Ansprüche, mit den Schritten: Herstellen eines Schraubenschafts (14) oder eines Rohlings für den Schraubenschaft (14) und Einstellen einer elastischen und/oder plastischen Dehnbarkeit des Schraubenschafts (14), so dass der Schraubenschaft (14) in wenigstens einem Dehnabschnitt (20) stärker elastisch und/oder plastisch dehnbar ist als im übrigen Schraubenschaft (14), **gekennzeichnet durch** Verringern einer Zugfestigkeit des Schraubenschafts (14) im Dehnabschnitt (20) mittels Wärmebehandeln des Schraubenschafts (14) im Dehnabschnitt (20) oder im Dehnabschnitt (20) und im Bereich des Gewindes (16).

12. Verfahren nach Anspruch 11, **gekennzeichnet durch** induktives Erwärmen und dadurch Anlassen des Schraubenschafts (14) im Dehnabschnitt (20) oder im Dehnabschnitt (20) und im Bereich des Gewindes (16).

## Claims

1. Connecting element, in particular wood screw, made of metal for structural wood construction, having a screw shank (14), wherein the screw shank (14), at least in certain portions, is provided with a thread (16), wherein the screw shank (14) has at least one extension portion (20), wherein a length of the extension portion (20) is at least 10% of the screw shank (14), wherein the extension portion (20) is plastically and/or elastically extensible, in the longitudinal direction of the connecting element (10), to a greater extent than the rest of the screw shank (14), and wherein a tensile strength of the extension portion (20) is lower than a tensile strength of the rest of the screw shank (14) by a factor of 1.25 to 5, **characterized in that** a diameter of the screw shank in the extension portion (20) is between the core diameter (d1) of the thread (16) and the outside diameter (d2) of the thread (16), and **in that** the extension portion (20) is heat treated in order to reduce the tensile strength of the screw shank (14) in the extension portion (20).

2. Connecting element according to Claim 1, **characterized in that** at least one extension portion has a substantially smooth outer circumference without a thread.

3. Connecting element according to Claim 1 or 2, **characterized in that** at least one extension portion is provided with a thread.

4. Connecting element according to at least one of the preceding claims, **characterized in that** the connecting element consists of a heat-treatable steel.

5. Connecting element according to at least one of the preceding claims, **characterized in that** the screw shank (14) has a drilling tip.

6. Connecting element according to Claim 5, **characterized in that** a cross section of the screw shank (14) is approximately semicircular in the region of the drilling tip.

7. Connecting element according to at least one of the preceding claims, **characterized in that**, in the portions of the screw shank (14) that are provided with the thread (16), a core diameter (d1) is greater than or equal to 60% of an outside diameter (d2).

8. Connecting element according to at least one of the preceding claims, **characterized in that**, in the portion of the screw shank (14) that is provided with the thread (16), a region between two thread flanks (30) of the thread (16) is concavely curved, at least in certain portions.

9. Connecting element according to at least one of the preceding claims, **characterized in that** the thread flanks (30) are provided with a flattening.

10. Connecting element according to at least one of the preceding claims, **characterized in that** a flank angle (4) of the thread flanks (30) is 40°.

11. Method for producing a connecting element according to at least one of the preceding claims, having the following steps: producing a screw shank (14) or a blank for the screw shank (14) and setting an elastic and/or plastic extensibility of the screw shank (14), with the result that the screw shank (14) is elastically and/or plastically extensible to a greater extent in at least one extension portion (20) than in the rest of the screw shank (14), **characterized by** reducing a tensile strength of the screw shank (14) in the extension portion (20) by means of heat treating the screw shank (14) in the extension portion (20) or in the extension portion (20) and in the region of the thread (16).

12. Method according to Claim 11, **characterized by** inductively heating and thereby tempering the screw shank (14) in the extension portion (20) or in the extension portion (20) and in the region of the thread (16).

## Revendications

1. Élément de liaison, en particulier vis à bois, en métal destiné à la construction en bois et comprenant une tige de vis (14), la tige de vis (14) étant pourvue au moins par portions d'un filetage (16), la tige de vis (14) comportant au moins une portion extensible (20), la longueur de la portion extensible (20) étant d'au moins 10 % de celle de la tige de vis (14), la portion extensible (20) pouvant être étendue plus fortement de manière plastique et/ou élastique dans la direction longitudinale de l'élément de liaison (10) que le reste de la tige de vis (14) et la résistance à la traction de la portion extensible (20) étant inférieure d'un facteur 1,25 à 5 à la résistance à la traction du reste de la tige de vis (14), **caractérisé en ce que** le diamètre de la tige de vis dans la portion extensible (20) est situé entre le diamètre central (d1) du filetage (16) et le diamètre extérieur (d2) du filetage (16) et **en ce que** la portion extensible (20) est traitée thermiquement afin de réduire la résistance à la traction de la tige de vis (14) dans la portion extensible (20).

2. Élément de liaison selon la revendication 1, **caractérisé en ce qu'**au moins une portion extensible comporte une périphérie extérieure sensiblement lisse sans filetage.

3. Élément de liaison selon la revendication 1 ou 2, **caractérisé en ce qu'**au moins une portion extensible est pourvue d'un filetage.

4. Élément de liaison selon l'une au moins des revendications précédentes, **caractérisé en ce que** l'élément de liaison est en acier de traitement.

5. Élément de liaison selon l'une au moins des revendications précédentes, **caractérisé en ce que** la tige de vis (14) comporte une pointe de perçage.

6. Élément de liaison selon la revendication 5, **caractérisé en ce qu'**une section transversale de la tige de vis (14) est sensiblement semi-circulaire au niveau de la pointe de perçage.

7. Élément de liaison selon l'une au moins des revendications précédentes, **caractérisé en ce que**, dans les portions de la tige de vis (14) qui sont pourvues du filetage (16), un diamètre central (d1) est supérieur ou égal à 60 % d'un diamètre extérieur (d2).

8. Élément de liaison selon l'une au moins des revendications précédentes, **caractérisé en ce que**, dans la portion de la tige de vis (14) qui est pourvue du filetage (16), une zone entre deux flancs de filetage (30) du filetage (16) est au moins partiellement incurvée concave.

9. Élément de liaison selon l'une au moins des revendications précédentes, **caractérisé en ce que** les flancs de filetage (30) sont pourvus d'un méplat.

10. Élément de liaison selon l'une au moins des revendications précédentes, **caractérisé en ce que** l'angle de flanc (4) des flancs de filetage (30) est de 40°.

11. Procédé de réalisation d'un élément de liaison selon l'une au moins des revendications précédentes, ledit procédé comprenant les étapes suivantes : réaliser une tige de vis (14) ou une ébauche de la tige de vis (14) et régler une extensibilité élastique et/ou plastique de la tige de vis (14) de sorte que la tige de vis (14) soit plus fortement extensible de manière élastique et/ou plastique dans au moins une portion extensible (20) que dans le reste de la tige de vis (14), **caractérisé par** la réduction de la résistance à la traction de la tige de vis (14) dans la portion extensible (20) par traitement thermique de la tige de vis (14) dans la portion extensible (20) ou dans la portion extensible (20) et dans la zone du filetage (16) .

12. Procédé selon la revendication 11, **caractérisé par** une opération de chauffage par induction et ainsi une opération de recuit de la tige de vis (14) dans la portion extensible (20) ou dans la portion extensible (20) et dans la zone du filetage (16).
